# EUROPEAN PATENT APPLICATION

(11) **EP 4 428 641 A1**
(43) Date of publication of application: **11.09.2024**
(21) Application number: 23160862.1
(22) Date of filing: 09.03.2023
(51) Int. Cl.: G05B 19/05, G05B 19/418

(54) **METHOD FOR CONFIGURING AN APPARATUS**

(71) Applicant: Siemens Aktiengesellschaft, 80333 München (DE)
(72) Inventor: Bischoff, Martin, 85653 Aying, Großhelfendorf (DE); Raab, Martin, 90584 Allersberg (DE)
(74) Representative: Siemens Patent Attorneys

(57) **Abstract**

A method for configuring an apparatus (A) is provided, the apparatus (A) comprising at least one drive (D1,D2,D3,D4) and a controller (CON) for controlling the at least one drive (D1,D2,D3,D4), the method comprising the steps of:
a) defining at least one task (TSK) to be fulfilled by the apparatus (A),
b) providing a neural policy network (NPN), configured to generate an output action vector (y) which includes one or more actions to be performed on the apparatus (A) based on an input state vector (x) that includes one or more states of the apparatus (A),
c) training the neural policy network (NPN) according to the at least one task (TSK), wherein the training is based on a simulation model (SIM) of the apparatus (A), the training being performed on a separate processor (PROC) at a location separate from the location of the apparatus (A),
d) transmitting the trained neural policy network (NPNₜ) obtained in step c) from the separate processor (PROC) to the controller (CON) of the apparatus (A), either indirectly via a further separate computing device (CLT) or directly, thereby configuring the controller (CON) for the task (TSK),
e) obtaining a value for at least one physical performance indicator (PI) by applying the trained neural policy network (NPNₜ) to one or more test cases (tc) within the simulation model (SIM) on the separate processor (PROC), and
f) transmitting the value for the at least one physical performance indicator (PI) obtained in step e) from the separate processor (PROC) to the further separate computing device (CLT) and/or to the apparatus (A).

Furthermore, computer program product and a computer program for carrying out the method are provided.

## Description

Independent of the grammatical term usage, individuals with male, female or other gender identities are included within the term.

The present invention relates to an apparatus with at least one drive and a controller for controlling the at least one drive. The invention further relates to a computer program product and a computer program for carrying out the method.

Modern controllers for material transport and other motion applications are often based on artificial intelligence (AI), e.g. on neural policy networks. Such neural policy networks are neural networks providing at least one control action to be performed by the controller of the apparatus based on corresponding input states of the apparatus. Such a neural policy network can for example be trained by so-called reinforcement learning, based on a reward which is a control gain to be achieved by the corresponding control action(s).

A significant part of the development effort of such a modern control system lies in the training of such neural networks. However, the engineers responsible for a larger system, e.g. an industrial manufacturing line with a large number of individual apparatuses, often do not have the expertise for implementing a training method for such a neural network or to judge whether a training is successful. It is also difficult for them to assess the benefit of a trained neural network in relation to a conventional control configuration or in relation to other controllers based on artificial intelligence, e.g. neural networks with different topologies or similar neural networks trained with different training strategies.

An AI based controller is therefore often viewed as a black box by the engineers of a larger system, where the individual apparatus forms only one of many components. Due to the complexity of the task of configuring an AI based controller, it is desirable to separate the task of neural network training from the task of overall system design. However, such a separation makes it hard for the overall system's engineer to make choices between different controller configurations and to decide on where to allocate resources, because the impact of these decisions on overall system performance cannot easily be judged. For example, an engineer facing the task of optimizing the throughput of processed material pieces through an industrial manufacturing line cannot easily decide which selection of controller configuration helps him to achieve this overall goal. When faced with limited available resources (e.g. financial, material and/or manpower resources), this system's engineer often cannot make an informed decision whether investing resources in optimizing the configuration of a specific controller is worthwhile or whether the available resources are better invested in optimizing a controller of a different control unit or even a completely different component of the system, in order to increase the throughput of the whole line. Similarly, alternative overall goals for system design could be the reduction of total energy consumption, the minimizing of error states, the reduction of system downtime and/or the reduction of stress and wear on the components.

It is therefore a goal of the present invention to provide a method for configuring an apparatus, which overcomes the above-mentioned drawbacks. In particular, a method for configuring an AI based apparatus shall be provided, where the AI training can be carried out separately from other engineering tasks, but which supports engineering decisions in the overall system's design.

These objects of the invention are achieved by claim 1 with respect to the configuration method, by claim 14 with respect to the computer program product, and by claim 15 with respect to the computer program when executed on a computer.

The method according to the invention is a method for configuring an apparatus, the apparatus comprising at least one drive and a controller for controlling the at least one drive.

The method comprises the following steps:
a) defining at least one task to be performed by the apparatus,
b) providing a neural policy network, configured to generate an output action vector which includes one or more actions to be performed on the apparatus based on an input state vector that includes one or more states of the apparatus,
c) training the neural policy network according to the at least one task, wherein the training is based on a simulation model of the apparatus, the training being performed on a separate processor at a location separate from the location of the apparatus,
d) transmitting the trained neural policy network obtained in step c) from the separate processor to the controller of the apparatus, either indirectly via a further separate computing device or directly, thereby configuring the controller for the task,
e) obtaining a value for at least one physical performance indicator by applying the trained neural policy network to one or more test cases within the simulation model on the separate processor, and
f) transmitting the value for the at least one physical performance indicator obtained in step e) from the separate processor to the further separate computing device and/or to the apparatus.

The apparatus is in particular an apparatus that is configured to automatically perform the transport or other movement of material, for example the transport of one or more solid pieces of material, the winding or unwinding of an extended material length onto/from a reel or the transport of liquid material. In other words, the apparatus can be a transportation and/or movement apparatus, in particular for an industrial system such as an industrial manufacturing line or a transporting line for material pieces such as parcels and/or luggage pieces. This movement task can be effected by the motion of the at least one drive, which in turn is controlled by the controller. This controller can be a central controller for controlling a plurality of drives. It is also possible that the apparatus comprises more than one such controller. In any case, the apparatus is configured to perform a transportation or other movement task automatically, and in particular this automatic working mode is enabled by a built-in controller.

The task defined in step a) can particularly be a transportation task or other movement task to be performed by the apparatus, by means of the at least one drive. This task is in particular to be performed automatically. The task does not have to be defined in terms of a fixed motion trajectory. Instead, it can be rather general and it can favourably contain random input elements. For example, the task can be to transport a number of randomly arriving solid material pieces in a given direction along a conveyor system, while avoiding collisions between the individual pieces. This general task can for example be defined by a designer or engineer working on optimizing an overall system containing the apparatus as a component. More generally speaking, the task in step a) can be a transport or movement task, which has at least one aspect of randomness associated with it, in particular the processing of a randomly incoming material stream. This incoming material stream does not have to be completely randomized. Instead, in the context of this invention, it is sufficient if there is some sort of unknown variation, e.g. a random spread around an average distribution in the distance between pieces.

In step b) a neural policy network is provided. The input state vector to be fed to the neural policy network can in particular include one or more states of the apparatus at a plurality of time points. This plurality of time points can comprise a current time point and one or more past time points. In other words, the input state vector then does not only describe a snap shot of the current state, but also a history of its past state(s). The neural policy network in particular comprises an input layer, which the input state vector can be fed to, and an output layer from which the output action vector is provided. Between the input layer and the output layer, the neural policy network can comprise a number of hidden layers, wherein the number of such hidden layers is related to the so-called depth of the neural policy network.

In step c) this neural network is trained to learn a general policy for fulfilling the task described above. During the training, the structure of the neural policy network is adapted, in particular by changing the weights between the individual nodes within the neural policy network. In the method according to the present invention, the training is performed by using a simulation model of the apparatus. In other words, the training is not done on the real apparatus but by using a digital (or virtual) twin. This training is performed on a separate processor, i.e. separate from the controller of the apparatus, and at a location separate from the location of the apparatus. For example, the training can be carried out on a cloud computing server.

In any case, both the simulation model of the apparatus and the neural policy network are provided on the separate processor. During the training, a series of input state vectors is generated within the simulation model to serve as virtual training data, and the neural policy network is applied to each input state vector in its current state of training to generate the corresponding output action vector. The action(s) contained in each output action vector are in turn applied to the apparatus within the simulation model, and a simulated outcome is obtained for each of these sub-steps of the training. These individual sub-steps are also often referred to as "physics steps". A set of such physics steps which is performed on a fixed state of the neural policy network can also be referred to as an "episode", and the internal structure of the neural policy is adapted from episode to episode as the training progresses. However, the details of the training can vary and depend on the training strategy that is applied. In the context of this invention, it is only essential that the training is performed in a location separate from the apparatus and by using a simulation model rather than a real apparatus.

The training result or the adapted neural policy network after a given period of training is referred to as the "trained neural policy network". This trained neural policy network may be the final result after the training has been completed or it may be an intermediate result after an initial training period.

In step d) the trained neural policy network is transmitted to the controller of the apparatus. This can be done either directly or indirectly via a further separate computing device. The indirect method will often be preferred, and the further separate computing device can for example be a computing client, in particular a computing client used by an engineer of an overall system into which the apparatus is to be integrated as a component. Independent of whether the trained neural policy network is transmitted to the controller directly or indirectly, the apparatus is configured for performing the task by integrating the trained neural policy network into the controller of the apparatus. Thereby a commissioning of the apparatus can be achieved.

When the trained neural policy network is transmitted to the controller indirectly via a further separate computing device, a virtual commissioning of the controller can be performed on this separate computing device, before the real commissioning of the real controller takes place. During this virtual commissioning the interplay of the neural policy network with other parts of the control software can for example be tested.

In step e), a value for a physical performance indicator is obtained from a calculation within the simulation model, by applying the trained neural policy network to one or more test cases. Each of these test cases can be represented by a predefined data set. These data sets can for example be provided by an engineer working on the overall system. So they can in particular be transmitted to the separate processor used for the training from the same separate computing device that the trained neural policy network is being transmitted to.

In any case, the value for the physical performance indicator obtained from the simulation is transmitted either to the apparatus or to the above-mentioned further separate computing device in step f). Again, a transfer to the further separate computing device is often preferred, especially if the value is provided to an engineer working on integrating the apparatus in an overall system via this computing device.

An important advantage of the present invention is that the calculation of the physical performance indicator in step e) and its transmission to the separate device in step f) help to make the benefit achieved by using the AI based controller transparent to an overall system's engineer. To this overall system's engineer, the neural policy network can still remain a "black box" in the sense that he or she does not need to understand the internal topology of the network. The engineer also does not have to understand the training strategy, as the training can be outsourced, for example as a cloud-based service. However, by receiving information on the simulated performance of the trained neural policy network, the system's engineer is given a tool to judge the benefit of using this particular AI based controller. This allows to make informed decision when choosing to implement a particular AI based controller configuration in the overall system. The engineer is also in a better position to assess whether the calculated benefits are worth investing a given amount of resources in the AI based controller. It is therefore essential for the present invention that the at least one physical performance indicator is not just calculated internally on the separate processor during the training (e.g. as part of a reward function used in the training), but is actually transmitted from there to a separate device in order to make the benefit transparent to a user who is not involved in the training procedure.

It should be noted that the above-mentioned steps a) through f) do not necessarily have to be performed in the given order. It will usually be appropriate to perform steps a) and b) before step c) in order to provide the input necessary for the computation required in the training. Also it is expedient to perform step c) before step d) and step e) before step f). Otherwise the order is not fixed. In particular, steps e) and f) can be performed in an intermediate state of the training so that steps c) and d) can optionally be resumed afterwards.

Besides the above method, the invention refers to a computer program product with program code, which is stored in machine-readable form on a carrier, for carrying out a method according to the invention or one or more preferred embodiments of the invention when the program code is executed on a computer. Furthermore, the invention refers to a computer program with program code for carrying out the method according to the invention or one or more preferred embodiments of the invention when the program code is executed on a computer. The advantages of the computer program product and the computer program correspond to the advantages described above for the method according to the invention.

Advantageous configurations and embodiments of the invention follow from the claims dependent on claim 1 as well as the following description. The advantageous features of the method, the computer program product and the computer program can generally be interchanged and combined.

In a preferred embodiment of the invention, the apparatus is or comprises a transportation system and/or a reel system. The transportation system can in particular be configured to process randomly incoming material, for example randomly incoming material pieces such as work pieces to be processed by an industrial manufacturing line or parcels or pieces of luggage to be processed by a parcel or luggage handling line. In general, the apparatus can be a transportation or movement apparatus for an industrial processing line.

To mention more specific examples, the transportation system can be a conveyor belt system, in particular a conveyor belt system for randomly incoming material pieces. Such a conveyor belt system can for example be a so-called "intelligent infeed" system, which comprises a linear arrangement of an inlet belt, and outlet belt and a number of infeed belts between the inlet and outlet belts. A random train of incoming pieces usually arrives on the inlet belt, and the outlet belt transports the pieces to an exit port of the apparatus. The intermediate infeed belts can serve to equalize the distance between the pieces on the outlet belt and/or to place the pieces on pre-determined positions on the outlet belt. The pre-determined positions on the outlet belt system can for example correspond to pre-defined carrier positions of a multi-carrier system.

In another example, the conveyor belt system can be configured to merge randomly incoming pieces from several parallel incoming conveyor belts to a common outlet belt, preferably while avoiding collisions and/or equalizing the distances between pieces on the outlet belt. Such a system is sometimes referred to as a "dynamic gapper" system.

In another example, the transportation system can be a liquid transportation system, where the task is to transport a liquid (e.g. in open or closed incoming vessels, again arriving as a random stream of vessels), while minimizing sloshing and spilling of the liquid.

In another example, the apparatus can be a reel system, configured to wind an elongate material onto a reel and/or to unwind such a material from a reel. Such a reel system can for example be a tape reel system, a foil reel system and/or a reel system for handling tubular bagging film. The task of such a reel system can also be associated with processing a randomly incoming stream of material pieces, e.g. in the foil wrapping or bagging of a random stream of incoming products.

All the above examples have in common that an incoming material stream, associated with some randomness, is to be handled in a smart way, thereby optimizing one or more parameters, such as avoiding collisions or spillage or maximizing throughput and/or a placement accuracy and/or an energy efficiency of the process. For all these types of movement tasks with random input streams, an AI based controller can favorably be used, and the advantages of the current invention are therefore particularly beneficial.

According to a preferred embodiment of the invention, the at least one physical performance indicator is at least one of:
- a material throughput achieved by the apparatus,
- an amount of energy consumed by the apparatus,
- a positioning accuracy for a material piece handled by the apparatus,
- an accuracy of a distance between subsequent material pieces handled by the apparatus,
- a quantity representing the utilization of a material buffer,
- an acceleration or force or torque on at least one of the drives,
- a voltage profile or voltage peak or power consumption profile or power consumption peak for at least one of the drives,
- a predicted frequency of error states of the apparatus.

All the above-mentioned physical quantities are quantities which typically need to be optimized in the material transportation or handling tasks described above. Transmitting a simulated value for at least one of the parameters, as achieved by applying the trained neural performance network in a virtual environment, helps the system's engineer to make informed decisions for the layout of an overall system, into which the above-mentioned apparatus is integrated.

In a particularly preferred embodiment, the method comprises the additional step:
g) obtaining a value for a predicted improvement in the at least one physical performance indicator by determining the difference between the value obtained in step e) and a reference value for a corresponding reference apparatus where the configuration of the controller differs from the configuration obtained in step d).

In other words, the simulation environment is not only used to predict a value for the physical performance indicator as such, but also to predict its expected improvement when changing from a reference apparatus to the apparatus with the AI based controller which uses the above-mentioned trained neural policy network. This allows an even better quantitative assessment of the expected performance gain when using such a controller configuration.

According to a first variant of this embodiment the reference value is determined from one or more physical measurements on a real reference apparatus when operating on the same one or more test cases. When such a real reference apparatus is used for assessing the performance increase, this reference apparatus can for example also be run with an AI based controller, in particular using a neural policy network with a different topology and/or a different training strategy or training state. In this case, the effect of the specific neural network configuration can be assessed. Alternatively, the real reference apparatus can be equipped with a conventional control configuration, thereby allowing the assessment of the benefit from changing to an AI based control configuration.

According to a second variant of the above-mentioned embodiment, the reference value is determined by applying a simulation model of the reference apparatus to the same one or more test cases. In other words, the reference value is also obtained from a digital twin, preferably by using the same simulation model which is used to obtain the first value for the physical performance indicator in step e). The simulation is also preferably carried out on the same separate processor as steps c) and e). In this variant, when the reference value is simulated, the reference apparatus in the digital twin can also either have a controller with a different AI based configuration, or it can be equipped with a conventional control configuration.

Generally and independently of how the reference value is generated, the method according to the above-mentioned embodiment can contain the additional step:
h) taking a decision in favour of using the trained neural policy network in the controller of the apparatus, based on the value of the predicted improvement in the at least one physical performance obtained in step g).

In other words, an overall system's engineer can base his or her decision on actually implementing the training neural policy network in the real application on the predicted performance gain.

According to a preferred embodiment of steps e), f) and the optional step g), the at least one physical performance indicator is a material throughput achieved by the apparatus. The achievable material throughput is a key performance indicator not just for the apparatus itself, but also for a larger industrial processing line, where the apparatus is to be integrated. Particularly favourably, in order to calculate the maximum material throughput, the trained neural policy network is applied to a plurality of test cases within the simulation model, where an amount of incoming material is varied between the individual test cases. This way, a calculated saturation limit can be determined for the material throughput, e.g. a limit where a tolerable number of collisions or other error states is exceeded.

According to a first variant for the sequence of steps, step e) can be performed after finalizing the training of the neural policy network of step c). In other words, the assessment of the benefit is carried out for the final state of the neural policy network, which is used for commissioning the apparatus. In this case, the performance gain of the actual controller configuration of the running system can be judged.

According to a second variant of the sequence of steps, step e) can be performed in an intermediate state of the neural policy network during the training of step c). In other words, the assessment of the benefit is carried out during the training. In this variant, the success of the initial training up to the intermediate state can be judged from the simulated physical performance indicator.

According to a preferred embodiment of step c), the training is achieved via reinforcement learning, in dependency on a reward for the output action vector generated by the neural policy network, the reward being calculated by using the simulation model of the apparatus. Reinforcement learning is a particularly favorable training method for smart transportation and/or movement tasks, because the training can be carried out largely autonomously, without the supervision of a user, and it leads to fast training results when the reward function is well defined. When the reward is calculated by using the simulation model, an interaction with a real apparatus is not needed for the training, and therefore the training step c) can favourably be carried out at a location separate from the apparatus. Also, an interaction of the system's engineer in the training of the neural policy network is not required, and the training can therefore easily be outsourced.

The reward used within the reinforcement training can be obtained as a cumulative reward function, composed of a number of reward components, each contributing with a corresponding weighting factor. In particular, one or more of the reward components can correspond to the one or more physical performance indicators calculated in step e) and, optionally, in step g). For example, one performance indicator can be a positioning accuracy, and the reward function can also contain a positioning accuracy as a reward component. In an extreme example of this variant, the at least one physical performance indicator can be identical with the reward function. Alternatively, however, the at least physical performance indicator can differ from the reward function, and in one example of this variant, the physical performance indicator can be completely different from all reward components included in the reward function. This embodiment allows an independent assessment of the performance of the trained neural policy network, based on one or more completely different performance indicators.

Preferably, the separate processor used in steps c) and e), and optionally step g), is part of a cloud computing server. A cloud computing server is a virtual or physical server, hosted remotely by a cloud service provider, that customers create or access via an internet connection. An advantage of this embodiment is that the transmission or release of the trained neural policy network in step d) can be provided to a customer (e.g. the operator of an industrial plant) via a software-as-a-service model. Within the current invention, the at least one physical performance indicator is transmitted to the customer in addition to the software itself, allowing an assessment of its benefit by the customer. The at least one physical performance indicator can therefore be used to support the marketing of the offered software service. Additionally or alternatively, the physical performance indicator can be used for determining a price at which the software is offered to the customer.

According to a generally preferred embodiment, the input state vector for the neural policy network comprises at least one of:
- a velocity or angular velocity for at least one of the drives,
- one or more sensor signals related to positions of incoming material pieces or other progress of transport of material,
- coordinates for target positions of a positioning task.

These are the most important input state parameters, which are characteristic of the typical apparatuses for transportation or other movement tasks, as described above.

According to another generally preferred embodiment, the output action vector of the neural policy network comprises a change in the velocity or angular velocity for at least one of the drives. A change in the velocity or angular velocity of the relevant drive(s) is the most important control parameter which is to be influenced by the controller within the typical apparatuses, in order to fulfill the predefined tasks, as described above.

Further advantages and details of the invention may be found in the exemplary embodiments described below and in the drawings, in which:
- Figure 1: shows a schematic view of an apparatus to be con-figured according to a first embodiment of the invention,
- Figure 2: shows a schematic illustration of the steps performed in the configuration method and
- Figure 3: shows a schematic representation of a neural policy network used in the method.

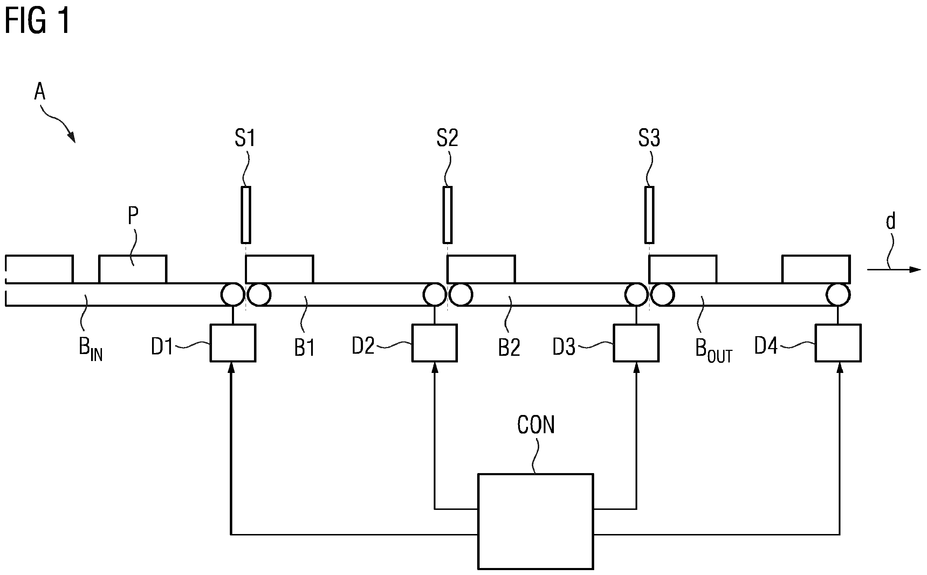

Figure 1 shows a schematic longitudinal section of an apparatus A which is to be configured with the method according to a first embodiment of the invention. In this example, the apparatus is a conveyor system of the type marketed under the term "intelligent infeed" by the company Siemens. The conveyor system comprises several conveyor belts B_{IN}, B1, B2, B_{OUT}, which are designed to transport an incoming train of material pieces P (e.g. work pieces, parcels or pieces of luggage) along an overall transport direction d. The material pieces P arrive on an inlet belt B_{IN} and are transferred to an outlet belt B_{OUT} by way of several intermediate infeed belts, of which two B1 and B2 are shown in this example. In a real application, the number of infeed belts can be different, and systems with three to five infeed belts are commonly used in industrial conveyor systems of this type. The purpose of the infeed belts is to adjust the spacing of an incoming train of material pieces P. For example, the task can be to equalize the distance between randomly incoming pieces and/or to position the pieces within pre-defined target areas on the outlet belt.

The motion of the pieces P on the individual belts is effected by corresponding drives D1 to D4. In this example, each of the belts B_{IN}, B1, B2, B_{OUT} is shown to be connected to one drive, but the actual number of drives can also be higher than the belt number (e.g. two drives per belt B_{IN}, B1, B2, B_{OUT}), or it could be smaller (in case of coupling of belt motions or if some passive conveyors are used). The motion of the belts B_{IN}, B1, B2, B_{OUT} by the drives D1 to D4 is controlled by a central controller CON. However, in other examples, the two belts on the periphery B_{IN} and B_{OUT} could also be controlled separately, while only the infeed belts are controlled by a common controller CON.

The configuration of the controller CON is based on a neural policy network, as will be explained in further detail below. In other words, the infeed belts, whose purpose it is to react to a randomly incoming train of material pieces, are controlled by using artificial intelligence. The neural policy network within the controller CON is to be fed an input state vector, which needs to contain some information on the incoming train of pieces P. In the example of Figure 1, this information is derived from a set of sensors S1, S2 and S3, which detect the passage of pieces P at the corresponding positions. The sensors S1 to S3 can for example be so-called light barriers, which are also sometimes called photoelectric sensors. The can in particular provide a rising signal flank when a piece P starts passing through the barrier and a falling signal flank when the piece ends (or vice versa). However, the details of the implementation are not essential. It only matters that the controller CON receives some input information regarding the specific material inflow, which generally has some type of randomness associated with it, and that the controller CON of the apparatus A is configured to react to the random inflow in a smart way, based on a neural policy network implemented in the controller CON. Figure 1 only shows one example of such an application, but many other applications are conceivable, where an apparatus A is configured to handle a randomly incoming material inflow in an intelligent way, based on machine learning, while optimizing one or more parameters, such as maximizing material throughput, reaching a positioning target and/or avoiding error states (e.g. from collisions).

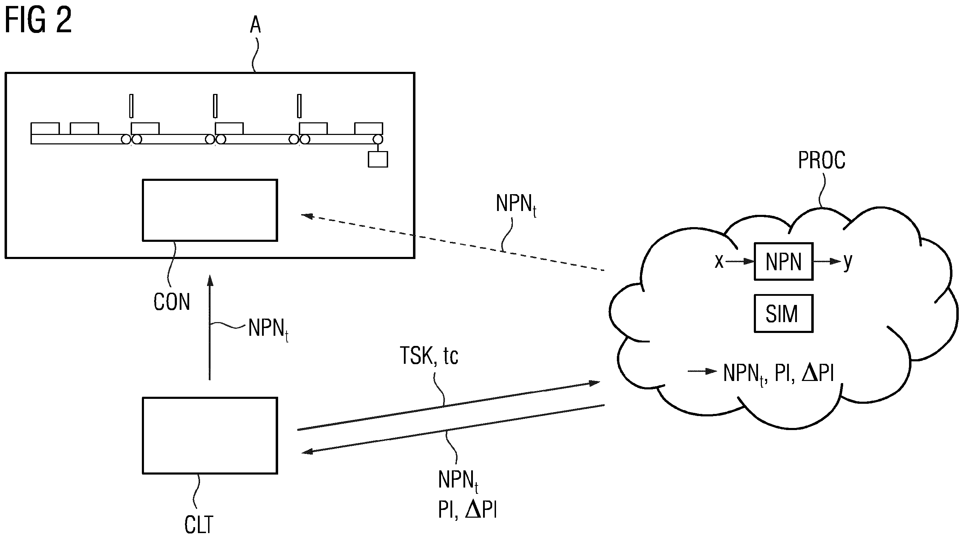

Figure 2 shows a schematic representation of the method of configuring such an apparatus A, according to a first embodiment. Figure 2 shows the apparatus A which can be designed similarly to the apparatus of Figure 1. In any case, it comprises a controller CON connected to one or more drives of the apparatus A. In addition, a separate processor PROC is shown, which can for example be a cloud server of part of a cloud server. More generally, the separate processor PROC is placed at a location separate from the location of the apparatus. The separate processor PROC is used for training a neural policy network NPN, which is then used in the configuration of the controller CON. In order to accomplish this, a number of steps are performed, according to the present invention.

A task TSK is defined that is to be fulfilled by the apparatus when it is operating. This task can be related to handling a randomly incoming material stream, as explained above. In the example of Figure 2, the task TSK is provided to the separate processor PROC from a further separate computing device CLT, as indicated by the corresponding arrow. This computing device can for example be a client computer used by a system's engineer, in particular by an engineer who works either on configuring the apparatus itself and/or on integrating the apparatus in a larger line.

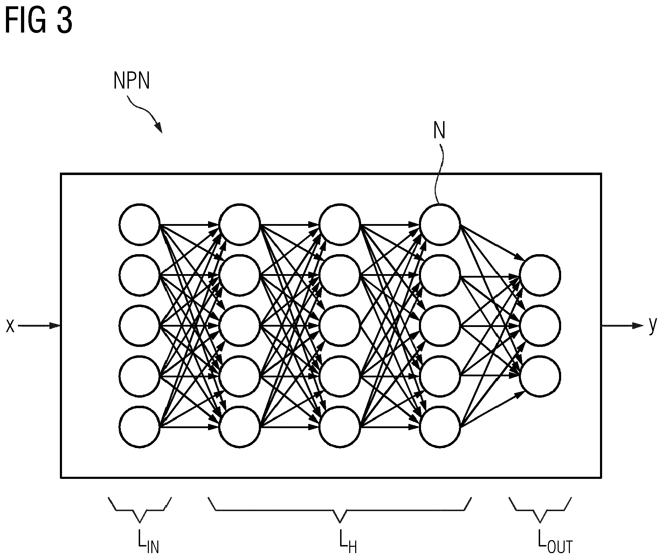

A neural policy network NPN is provided within the separate processor PROC. Initially, the neural policy network NPN is not yet trained, but its basic topology of layers and nodes is defined, as will be explained in more detail with reference to Figure 3. As input, the neural policy network NPN is configured to receive an input state vector x and to produce an output action vector y. In short, the input state vector x comprises information on the state of the apparatus before the desired control action is to take place, and the output action vector y comprises the control actions to be performed by the controller and the drive(s). At first, this (untrained) neural policy network NPN is only provided virtually, within the separate processor PROC. Within the same processor PROC, a simulation model SIM of the apparatus, including its controller and drive(s), is provided. This simulation model SIM can for example be based on a physics-engine or it can be a data driven model (in turn using a neural network).

After defining the task TSK and providing the neural policy network NPN, the training of the neural policy network NPN is performed. This takes place within the separate processor PROC, in a virtual environment. The training is carried out according to the pre-defined task TSK. In other words the goal of the training is that a controller CON configured with the trained neural policy network NPNₜ is able to fulfill the task. The training is based on the simulation model SIM which is implemented on the same separate processor PROC. In other words, when the neural policy network NPN is fed a series of input state vectors x (corresponding to a series of training data sets) during the training, the corresponding output action vectors y are generated by the neural policy network NPN and these output action vectors y are applied within the simulation model SIM of the apparatus A, on a state corresponding to the respective input state vector x. All this is done within the virtual environment on the processor PROC. The training is thus carried out on a digital twin of the apparatus A, rather than the real apparatus A itself. According to a specific example, reinforcement learning can be used as a training method, and a reward can be calculated for each output action vector y, based on the simulation model SIM of the apparatus A. The input state vectors x (or training data sets) used within the training can advantageously automatically be generated within the simulation model SIM. For example, randomly incoming streams of material pieces can be provided as input for the training within the simulation.

The trained neural policy network NPNₜ, obtained in this way, is transmitted to the controller CON of the apparatus A, to be used in running the controller CON. The transmission can either take place indirectly, via the further separate computing device CLT (as indicated by the solid arrows), or directly (as indicated by the dashed arrow). The indirect variant is preferred, particularly when going via a client computer CLT used by a system's engineer. In this variant, the trained neural policy network NPNₜ can first be tested by the engineer in a virtual commissioning phase, before being deployed to the controller CON for commissioning of the real-life apparatus A.

The trained neural policy network NPNₜ is applied to one or more test cases tc, which in turn can be provided by the system's engineer from the client computer CLT. The application to the test cases is again performed virtually, by using the simulation model SIM on the separate processor PROC. In this way, a simulated value for at least one pre-defined physical performance indicator PI is obtained. This simulated value PI is then transmitted from the separate processor PROC to the client computer CLT (although more generally, it can alternatively be transmitted directly to the apparatus A, similar to the trained neural policy network NPNₜ).

This physical performance indicator PI can for example be an achievable material throughput that can be handled by the apparatus, when its controller CON is operated with the trained neural policy network NPNₜ. More generally, it is a physical performance indicator which characterizes how well suited the trained neural policy network NPNₜ is for fulfilling the task, when run on the controller CON of the apparatus A. It is also possible to obtain and transmit more than one such performance indicator.

Optionally, a value for a predicted improvement ΔPI in the physical performance indicator PI can also be derived from the simulation, by obtaining the difference between the first simulated value (as described above) and a reference value for a corresponding reference apparatus. This reference apparatus can particularly be essentially the same as the apparatus A, the only difference being the configuration of the controller CON. The reference apparatus can be a real apparatus, where the physical performance indicator is obtained from real physical measurements. Alternatively, the reference apparatus can be an apparatus simulated in the virtual environment, preferably using the same simulation model SIM as used for the apparatus A. In any case, this optional step of obtaining and transferring a predicted improvement ΔPI by considering a reference configuration allows the system's engineer to take an informed decision on whether or not to deploy the trained neural policy network NPNₜ in the configuration of the real apparatus A, by enabling him or her to quantitatively assess its benefits.

Figure 3 shows a schematic representation of a neural policy network NPN used in the method according to the present invention. The neural policy network NPN is a complex network of interconnected nodes N, which can be subdivided into layers. The network comprises an input layer L_{IN}, to which an input state vector x is fed, and an output layer L_{OUT}, by which an output action vector y is generated. Between the input layer L_{IN} and the output layer L_{OUT} is a number of hidden layers L_{H}, only three of which are shown in the example of Figure 3. The actual number of hidden layers L_{H} can be much higher, representing the depth of the neural network. Optionally, the input vector x can be processed in a pre-processing step before being fed to the input layer L_{IN} and/or the output vector can be processed by a post-processing step after being obtained from the output layer L_{OUT}. These optional pre-processing and post-processing steps are not shown here for the sake of simplicity.

In particular, the input state vector x and the output action vector y of such a neural policy network NPN can be the same as the input and output of a conventional controller. The input state vector x can comprise any parameters characteristic of the current state of the apparatus A, for example:
- Signals from sensors in the apparatus, e.g. signals from light barriers;
- signals related to the motions of the apparatus, e.g. signals related to drive velocities or angular velocities;
- further states of the apparatus, e.g. a value representing the use of a material buffer, a temperature or a pressure

The output action vector y can contain any parameters related to the motion setpoints of the one or more drives D1 to D4, for example target drive velocities or angular velocities and/or target changes in the drive velocities or angular velocities.

It is to be noted that independent of the grammatical term usage within the above description, individuals with male, female or other gender identities are included within the term.

## Claims

1. A method for configuring an apparatus (A), the apparatus (A) comprising at least one drive (D1,D2,D3,D4) and a controller (CON) for controlling the at least one drive (D1,D2,D3,D4),
wherein the method comprises the following steps:
a) defining at least one task (TSK) to be performed by the apparatus (A),
b) providing a neural policy network (NPN), configured to generate an output action vector (y) which includes one or more actions to be performed on the apparatus (A) based on an input state vector (x) that includes one or more states of the apparatus (A),
c) training the neural policy network (NPN) according to the at least one task (TSK), wherein the training is based on a simulation model (SIM) of the apparatus (A), the training being performed on a separate processor (PROC) at a location separate from the location of the apparatus (A),
d) transmitting the trained neural policy network (NPNₜ) obtained in step c) from the separate processor (PROC) to the controller (CON) of the apparatus, either indirectly via a further separate computing device (CLT) or directly, thereby configuring the controller (CON) for the task (TSK),
e) obtaining a value for at least one physical performance indicator (PI) by applying the trained neural policy network (NPNₜ) to one or more test cases (tc) within the simulation model (SIM) on the separate processor (PROC) and
f) transmitting the value for the at least one physical performance indicator (PI) obtained in step e) from the separate processor (PROC) to the further separate computing device (CLT) and/or to the apparatus (A).

2. The method according to claim 1, wherein the apparatus (A) is or comprises a transportation system and/or a reel system.

3. The method according to claim 1 or 2, wherein the at least one physical performance indicator (PI) is a least one of:
- a material throughput achieved by the apparatus (A),
- an amount of energy consumed by the apparatus (A),
- a positioning accuracy for a material piece (P) handled by the apparatus (A),
- an accuracy of a distance between subsequent material pieces (P) handled by the apparatus (A),
- a quantity representing the utilization of a material buffer,
- an acceleration or force or torque on at least one of the drives (D1,D2,D3,D4),
- a voltage profile or voltage peak or power consumption profile or power consumption peak for at least one of the drives (D1,D2,D3,D4),
- a predicted frequency of error states of the apparatus (A) .

4. The method according to any of claims 1 to 3, comprising the additional step:
g) obtaining a value for a predicted improvement (ΔPI) in the at least one physical performance indicator (PI) by determining the difference between the value obtained in step e) and a reference value for a corresponding reference apparatus where the configuration of the controller (CON) differs from the configuration obtained in step d).

5. The method according to claim 4, wherein the reference value (PIᵣ) is determined from one or more physical measurements on a real reference apparatus when operating on the same one or more test cases.

6. The method according to claim 4, wherein the reference value (PIᵣ) is determined by applying a simulation model (SIM) of the reference apparatus to the same one or more test cases (tc).

7. The method according to any of the preceding claims, wherein the at least one physical performance indicator (PI) is a material throughput achieved by the apparatus (A), wherein in step e) the trained neural policy network (NPNₜ) is applied to a plurality of test cases (tc) within the simulation model (SIM), where an amount of incoming material (P) is varied between the individual test cases (tc).

8. The method according to any of the claims 1 to 7, wherein step e) is performed after finalizing the training of the neural policy network (NPN) of step c).

9. The method according to any of the claims 1 to 7, wherein step e) is performed in an intermediate state of the neural policy network (NPN) during the training of step c).

10. The method according to any of the preceding claims, wherein the training in step c) is achieved via reinforcement learning, in dependency on a reward for the output action vector (y) generated by the neural policy network (NPN), the reward being calculated by using the simulation model (SIM) of the apparatus (A).

11. The method according to any of the preceding claims, wherein the separate processor (PROC) used in steps c) and e) is part of a cloud computing server.

12. The method according to any of the preceding claims, wherein the input state vector (x) for the neural policy network (NPN) comprises at least one of:
- a velocity or angular velocity for at least one of the drives (D1,D2,D3,D4),
- one or more sensor signals related to positions of incoming material pieces (P) or other progress of transport of material,
- coordinates for target positions of a positioning task.

13. The method according to any of the preceding claims, wherein the output action vector (y) of the neural policy network (NPN) comprises a change in the velocity or angular velocity for at least one of the drives (D1,D2,D3,D4).

14. A computer program product with program code, which is stored in machine-readable form on a carrier, for carrying out a method according to one of the preceding claims when the program code is executed on a computer.

15. A computer program with program code for carrying out a method according to one of claims 1 to 13 when the program code is executed on a computer.
